# EUROPÄISCHE PATENTANMELDUNG

(11) **EP 4 628 277 A1**
(43) Veröffentlichungstag der Anmeldung: **08.10.2025**
(21) Anmeldenummer: 25168280.3
(22) Anmeldetag: 03.04.2025
(51) Int. Cl.: B29C 45/14, B29C 45/16, G01S 7/02, G01S 7/40, H01Q 1/02, H01Q 1/32

(54) **VERFAHREN ZUR HERSTELLUNG EINES VORSPRITZLINGS UND/ODER EINES RADOMS FÜR RADARVORRICHTUNGEN FÜR FAHRZEUGE**

(30) Priorität: 04.04.2024 DE 102024109457
(71) Anmelder: OECHSLER AG, 91522 Ansbach (DE)
(72) Erfinder: Kronberger, Stefan, 91522 Ansbach (DE); Neumann, Steffen, 91726 Gerolfingen (DE); Woerlein, Dominik, 91639 Wolframs-Eschenbach (DE)
(74) Vertreter: Canzler & Bergmeier Patentanwälte Partnerschaft mbB

(57) **Zusammenfassung**

Die Erfindung betrifft ein Verfahren zur Herstellung eines Vorspritzlings (1) und/oder eines Radoms (20) für Radarvorrichtungen für Fahrzeuge bei dem ein Vorspritzling (1) mit zumindest einem Kontaktelement zum elektrischen Kontaktieren einer Heizeinheit (19) zum Beheizen des Radoms (20) ausgebildet wird. Zur Ausbildung des Vorspritzlings (1) wird das zumindest eine Kontaktelement (2, 3) zumindest teilweise mit Kunststoff (4 ) umspritzt.

## Beschreibung

Die vorliegende Erfindung betrifft ein Verfahren, insbesondere Radomvorspritzlingherstellungsverfahren und/oder Radomherstellungsverfahren, zur Herstellung eines Vorspritzlings und/oder eines Radoms für Radarvorrichtungen für Fahrzeuge bei dem ein Vorspritzling mit zumindest einem Kontaktelement zum elektrischen Kontaktieren einer Heizeinheit zum Beheizen des Radoms ausgebildet wird.

Aus der DE 101 56 699 A1 ist ein Herstellungsverfahren eines Radoms offenbart.

Aufgabe der vorliegenden Erfindung ist es, ein verbessertes Herstellungsverfahren für einen Vorspritzling und/oder ein Radom bereitzustellen.

Die Aufgabe wird gelöst durch ein Verfahren zur Herstellung eines Vorspritzlings, ein Vorspritzling, ein Radom und/oder eine Radarvorrichtung mit den Merkmalen der unabhängigen Ansprüche. Vorteilhafte oder bevorzugte Ausführungen sind jeweils Gegenstand eines korrespondierenden abhängigen Anspruchs.

Vorgeschlagen wird ein Verfahren zur Herstellung eines Vorspritzlings und/oder eines Radoms für Radarvorrichtungen für Fahrzeuge. Das hier beschriebene Verfahren zur Herstellung des Vorspritzlings kann somit ein Radomvorspritzlingherstellungsverfahren sein. Zusätzlich oder alternativ kann das hier beschriebene Verfahren zur Herstellung des Radoms ein Radomherstellungsverfahren sein. Das Radom ist somit ein Fahrzeugradom. Der Vorspritzling kann ferner ein Radomvorspritzling sein. Das Radom dient als Abdeckung für die Radarvorrichtung. Der Vorspritzling ist ein Halbzeug, das zur Herstellung des Radoms dient.

Beim Verfahren wird ein Vorspritzling mit zumindest einem Kontaktelement zum elektrischen Kontaktieren einer Heizeinheit zum Beheizen des Radoms ausgebildet.

Zur Ausbildung des Vorspritzlings wird das zumindest eine Kontaktelement zumindest teilweise mit Kunststoff umspritzt. Dies schützt das Kontaktelement vor Umwelteinflüssen und mechanischen Beschädigungen. Gleichzeitig wird eine feste Verankerung des Kontaktelements im Vorspritzling sichergestellt, was die strukturelle Integrität des Systems verbessert. Zusätzlich oder alternativ wird dazu in einem Verfahrensschritt der Vorspritzling ausgebildet, in dem das zumindest eine Kontaktelement angeordnet ist. In einem späteren Schritt muss das zumindest eine Kontaktelement nicht mehr hinzugefügt werden. Vor dem Umspritzen des zumindest einen Kontaktelements kann es noch nicht mit Kunststoff umspritzt gewesen sein. Vor dem Umspritzen des zumindest einen Kontaktelements war somit noch kein Kunststoff angespritzt. Der Ausgangspunkt, d.h. vor dem Umspritzen, war lediglich das zumindest eine Kontaktelement, also noch ohne angespritzten Kunststoff, der dann den Vorspritzling zusammen mit dem zumindest einen Kontaktelement bildet.

In einer vorteilhaften Weiterbildung der Erfindung wird das zumindest eine Kontaktelement derart umspritzt, dass es sich von einer Außenseite des Vorspritzlings bis zu einer Innenseite des Vorspritzlings hindurch erstreckt. Dies erleichtert die elektrische Anbindung von Komponenten an das zumindest eine Kontaktelement, ohne die Struktur des Vorspritzlings zu beeinträchtigen. Die durchgehende Anordnung verbessert zudem die mechanische Stabilität des Kontaktelements innerhalb des Vorspritzlings.

Vorteilhaft ist es, wenn das zumindest eine Kontaktelement in ein erstes Spritzgusswerkzeug, insbesondere formschlüssig, eingelegt wird. Dadurch wird eine präzise Positionierung des Kontaktelements im Vorspritzling ermöglicht, was die Montage vereinfacht und die Fertigungsgenauigkeit erhöht. Die formschlüssige Einlegung verhindert zudem eine Verschiebung des Kontaktelements während des Spritzgussprozesses, was zu einer hohen Qualität führt.

Des Weiteren ist es vorteilhaft, wenn zumindest ein Haltefortsatz des zumindest einen Kontaktelements in eine dafür vorgesehene Aussparung im ersten Spritzgusswerkzeug angeordnet wird. Dies sichert das Kontaktelement zusätzlich im Werkzeug und vermeidet Verformungen oder Beschädigungen während des Umspritzens. Außerdem ermöglicht diese Anordnung eine exaktere Ausrichtung des Kontaktelements, was die Effizienz der elektrischen Verbindung verbessert.

Vorteilhafterweise wird das zumindest eine Kontaktelement derart umspritzt, dass zumindest ein Kontaktbereich zumindest bereichsweise frei von dem Kunststoff bleibt, der den Vorspritzling bildet. Zusätzlich oder alternativ ist es von Vorteil, wenn das zumindest eine Kontaktelement derart umspritzt, dass zumindest ein Anschlussbereich zumindest bereichsweise frei von dem Kunststoff bleibt, der den Vorspritzling bildet. Dadurch kann der für die elektrische Funktion wesentliche Kontaktbereich und/oder der Anschlussbereich des Kontaktelements zugänglich gehalten werden. Infolgedessen ist keine oder nur eine geringe Nachbearbeitung des Vorspritzlings nötig.

Darüber hinaus ist es vorteilhaft, wenn das zumindest eine Kontaktelement derart umspritzt wird, dass eine Elementinnenseite des zumindest einen Kontaktelements zumindest bereichsweise überspritzt wird, wobei die Elementinnenseite den Anschlussbereich umfasst. Durch das Überspritzen bestimmter Bereiche wird eine zusätzliche Isolierung und Schutz vor mechanischen Einwirkungen erreicht, ohne die Funktionalität des Anschlussbereichs zu beeinträchtigen. Zusätzlich oder alternativ kann dadurch eine verbesserte Stabilität des zumindest einen Kontaktelements und des umspritzten Kunststoffs erzielt werden.

Gemäß einer vorteilhaften Weiterbildung der Erfindung wird das zumindest eine Kontaktelement derart umspritzt, dass an der Elementinnenseite eine Aussparung in dem den Vorspritzling bildenden Kunststoff ausgebildet wird, so dass der Anschlussbereich frei bleibt. Die Aussparung kann vorzugsweise zwischen zwei Haltefortsätzen angeordnet sein. Diese gezielte Aussparung ermöglicht einen ungehinderten Zugang zum Anschlussbereich für eine elektrische Kontaktierung mit dem Anschlussbereich.

Es ist vorteilhaft, wenn das zumindest eine Kontaktelement derart umspritzt wird, dass eine Elementaußenseite des zumindest einen Kontaktelements zumindest bereichsweise frei von Kunststoff bleibt, wobei die Elementaußenseite den Kontaktbereich umfasst. Hierbei kann das zumindest eine Kontaktelement derart umspritzt werden, dass die Elementaußenseite vollständig frei von Kunststoff bleibt. Diese Gestaltung erleichtert den elektrischen Anschluss externer Komponenten, indem sie einen unmittelbaren Zugriff auf den Kontaktbereich gewährleistet. Des Weiteren muss hierdurch der Kontaktbereich nicht mehr nachbearbeitet werden. Beispielsweise kann darauf verzichtet werden, den Kontaktbereich von Kunststoff zu befreien, um die durch den Kunststoff gebildete Isolierung zu entfernen.

Vorteilhaft ist es, wenn ein zweites Spritzgusswerkzeug beim Umspritzen plan an den Kontaktbereich angelegt wird. Diese präzise Anlage des Werkzeugs gewährleistet eine ebenmäßige Oberfläche des Vorspritzlings, was die aerodynamischen Eigenschaften verbessert und das Erscheinungsbild optimiert. Zusätzlich oder alternativ bleibt hierdurch der Kontaktbereich frei von Kunststoff, so dass keine Nachbearbeitung mehr nötig ist, um beispielsweise den Kontaktbereich freizulegen.

Vorgeschlagen wird, dass das zumindest eine Kontaktelement derart mit dem Kunststoff umspritzt wird, dass eine Außenseite des Vorspritzlings und der zumindest eine Kontaktbereich eine, insbesondere plane, Fläche und/oder einen glatten und/oder stufenlosen Übergang bilden. Dies ermöglicht eine nahtlose Integration des Kontaktelements in den Vorspritzling, was beispielsweise auch ein visuelles Erscheinungsbild des Radoms verbessert. Außerdem kann hierdurch, wie im Folgenden näher erläutert, eine Heizeinheit, insbesondere ein Heizdraht, über den stufenlosen Übergang zwischen Kontaktelement und Vorspritzling gelegt werden, ohne dass Vorsprünge überwunden werden müssen.

Vorteilhaft ist es, wenn das zumindest eine Kontaktelement derart umspritzt wird, dass sich der von der Elementinnenseite wegerstreckende Haltefortsatz aus dem Vorspritzling erstreckt. Durch das Hervorstehen des Haltefortsatzes wird eine robuste mechanische Verankerung des Kontaktelements im Vorspritzling sichergestellt, was dessen mechanische Stabilität und Zuverlässigkeit erhöht.

Vorteilhaft ist es ebenso, wenn der Kunststoff an eine Elementumfangsseite des zumindest einen Kontaktelements zumindest teilweise angespritzt wird. Das teilweise Umspritzen bietet einen gezielten Schutz des Kontaktelements vor Umwelteinflüssen und mechanischen Beanspruchungen, ohne die elektrische Zugänglichkeit zu beeinträchtigen. Außerdem kann hierdurch das zumindest eine Kontaktelement stabiler mit dem Kunststoff und somit dem Vorspritzling verbunden werden.

Vorteilhaft ist es, wenn das zumindest eine Kontaktelement derart umspritzt wird, dass es zumindest an der Elementinnenseite formschlüssig mit dem Vorspritzling verbunden ist. Eine formschlüssige Verbindung verbessert die mechanische Festigkeit der Einheit aus Kontaktelement und Vorspritzling.

Vorteilhaft ist es des Weiteren, wenn das zumindest eine Kontaktelement derart mit dem Kunststoff umspritzt wird, dass eine Innenseite des Vorspritzlings, die auf der zur Außenfläche abgewandten Seite des Vorspritzlings angeordnet ist, und der zumindest eine Anschlussbereich zueinander beabstandet sind, wobei der zumindest eine Anschlussbereich vorzugsweise gegenüber der Innenfläche abgesetzt ist. Hierdurch bildet sich eine, insbesondere vollständig umlaufende, Abstufung zum Anschlussbereich hin aus. Der Anschlussbereich ist somit in einer Vertiefung angeordnet, wobei der Anschlussbereich vom Kunststoff umrandet ist. Infolgedessen kann beispielsweise ein Kontaktpin oder Kontaktstift auf den Anschlussbereich gedrückt werden, wobei durch die Vertiefung verhindert werden kann, dass der Kontaktpin oder Kontaktstift seitlich von dem Anschlussbereich rutscht.

Vorteilhaft ist es, wenn auf den Vorspritzling, insbesondere auf die Außenseite, zumindest eine Heizeinheit zum Beheizen des Radoms angeordnet wird. Die Heizeinheit kann ein Heizdraht sein. Die Anordnung der Heizeinheit auf der Außenseite des Vorspritzlings ermöglicht eine effiziente Beheizung des Radoms. Die Verwendung eines Heizdrahts bietet dabei den Vorteil einer gleichmäßigen Wärmeverteilung über eine Radomoberfläche.

Von Vorteil ist es, wenn die Heizeinheit mit dem zumindest einen, insbesondere mit zwei, vorzugsweise voneinander elektrisch isolierten, Kontaktbereichen kontaktiert wird. Durch die elektrische Verbindung der Heizeinheit mit dem zumindest einen Kontaktbereich wird eine zuverlässige Stromversorgung der Heizeinheit gewährleistet.

Vorteilhaft ist es, wenn die Heizeinheit mittels Ultraschallschweißens mit dem Vorspritzling verbunden wird, insbesondere in den Vorspritzling eingebettet wird. Insbesondere kann der Heizdraht mittels dem Ultraschallschweißens mit dem Vorspritzling eingebettet werden. Das Ultraschallschweißen ermöglicht eine feste und dauerhafte Verbindung zwischen Heizeinheit und Vorspritzling, was die mechanische Integrität und Zuverlässigkeit der Gesamtkonstruktion verbessert. Die Einbettung der Heizeinheit in den Vorspritzling schützt diese zusätzlich vor mechanischen Beschädigungen und Umwelteinflüssen, was die Lebensdauer des Systems verlängert. Das Einbetten der Heizeinheit bzw. des Heizdrahts und das Verlegen der Heizeinheit bzw. des Heizdrahts kann vorteilhafterweise gleichzeitig erfolgen. Wenn der Heizdraht auf den Vorspritzling abgelegt wird, wird er gleichzeitig mittels dem Ultraschallschweißen eingebettet.

Ebenso ist es von Vorteil, wenn das Kontaktieren der Heizeinheit mit dem zumindest einen Anschlussbereich mittels Thermokompressionsschweißens durchgeführt wird. Das Thermokompressionsschweißen bietet eine hochwertige, leitfähige Verbindung zwischen Heizeinheit und Anschlusskontakt, was eine effiziente Energieübertragung und damit eine optimale Heizleistung ermöglicht.

Vorteilhaft ist es, wenn beim Kontaktieren der Heizeinheit mit dem zumindest einen Kontaktbereich mittels Thermokompressionsschweißens eine Umhüllung, insbesondere ein Backlack, entfernt wird. Dies verbessert die elektrische Verbindung zwischen Heizeinheit und Kontaktbereich, indem es eine direkte Metall-zu-Metall-Verbindung ermöglicht, was die elektrische Leitfähigkeit und die Zuverlässigkeit der Verbindung erhöht. Das Entfernen der Umhüllung trägt zudem zur Minimierung von Widerstandsverlusten bei, was die Effizienz der Heizeinheit steigert.

Ferner ist es von Vorteil, wenn der Heizdraht mäanderförmig auf den Vorspritzling, insbesondere auf die Außenfläche, angeordnet wird. Durch die mäanderförmige Anordnung des Heizdrahtes wird eine gleichmäßige Wärmeverteilung über die gesamte Oberfläche des Radoms erreicht, was die Effektivität des Beheizungssystems verbessert.

Vorteilhaft ist es, wenn der Vorspritzling und die Heizeinheit umspritzt wird, so dass der Vorspritzling und die Heizeinheit von einer Schutzhülle umgeben sind. Das Umspritzen mit einer Schutzhülle bietet einen zusätzlichen Schutz vor Umwelteinflüssen und mechanischen Beschädigungen, was die Lebensdauer und Zuverlässigkeit des gesamten Systems erhöht.

Von Vorteil ist es, wenn zuerst der Vorspritzling ausgebildet wird, in dem das zumindest eine Kontaktelement mit dem Kunststoff umspritzt wird. Zusätzlich oder alternativ ist es vorteilhaft, wenn danach die Heizeinheit auf dem Vorspritzling angeordnet wird. Zusätzlich oder alternativ ist es vorteilhaft, wenn danach die Heizeinheit mit dem Vorspritzling verbunden wird. Zusätzlich oder alternativ ist es vorteilhaft, wenn danach die Heizeinheit mit dem zumindest einen Kontaktelement kontaktiert wird. Zusätzlich oder alternativ ist es vorteilhaft, wenn danach der Vorspritzling und die Heizeinheit mit der Schutzhülle umspritzt werden. Dieser aufeinanderfolgende Fertigungsprozess ermöglicht eine effiziente Ausbildung und/oder Integration der Komponenten, bei dem jeder Verfahrensschritt auf dem vorherigen folgt, was die Fertigungszeit und - kosten reduziert. Das schrittweise Verfahren ermöglicht zudem eine Qualitätskontrolle zu jedem Zeitpunkt des Prozesses, was die Endproduktqualität sicherstellt.

Vorteilhaft ist es, wenn zwei Kontaktelemente mit dem Kunststoff umspritzt werden, die vorzugsweise voneinander beabstandet angeordnet werden. Die Verwendung von zwei Kontaktelementen ermöglicht eine flexiblere Anbindung der Heizeinheit und verbessert deren Stromversorgung, indem sie eine redundante oder differenzielle Ansteuerung ermöglicht. Die räumliche Trennung der Kontaktelemente isoliert beide voneinander. Beide Kontaktelemente weisen hierbei jeweils einen Kontaktbereich und einen Anschlussbereich auf. Des Weiteren können beide Kontaktelemente zueinander baugleich ausgebildet sein.

Vorteilhaft ist es, wenn die Heizeinheit von zwei, insbesondere voneinander elektrisch isolierten, Kontaktbereichen kontaktiert wird. Infolgedessen kann ein Stromkreis durch die Heizeinheit ausgebildet werden, um eine Wärmeerzeugung zu ermöglichen.

Von Vorteil ist es, wenn das zumindest eine Kontaktelement als Stanz- und/oder Biegeteil ausgebildet wird. Beispielsweise kann das zumindest eine Kontaktelement ausgestanzt und/oder gebogen werden. Hierdurch kann eine sehr kostengünstige Herstellung des zumindest einen Kontaktelements erreicht werden.

Von Vorteil ist es, wenn das zumindest eine Kontaktelement aus Metall und/oder aus einem Blech ausgestanzt ist. Infolgedessen weist es eine elektrische Leitfähigkeit aus, um die Heizeinheit mit elektrischer Energie versorgen zu können.

Vorgeschlagen wird ferner ein Vorspritzling, der gemäß einem oder mehreren Verfahrensmerkmale der vorherigen und/oder nachfolgenden Beschreiung hergestellt ist.

Des Weiteren wird ein Radom vorgeschlagen, das gemäß einem oder mehreren Verfahrensmerkmalen der vorherigen und/oder nachfolgenden Beschreiung hergestellt ist.

Vorgeschlagen wird außerdem eine Radarvorrichtung, die ein Radom aufweist, welches ein oder mehrere Merkmale der vorangegangenen und/oder nachfolgenden Beschreibung aufweist. Zusätzlich oder alternativ kann das Radom der Radarvorrichtung auch gemäß einem oder mehreren Verfahrensmerkmalen der vorherigen und/oder nachfolgenden Beschreiung hergestellt werden.

Weitere Vorteile der Erfindung sind in den nachfolgenden Ausführungsbeispielen beschrieben. Es zeigen:
- **Figur 1**: eine perspektivische Ansicht auf eine Innenseite eines Vorspritzlings,
- **Figur 2**: eine perspektivische Ansicht eines Ausschnitts der Innenseite des Vorspritzlings,
- **Figur 3**: eine perspektivische Ansicht auf eine Außenseite eines Vorspritzlings,
- **Figur 4**: eine perspektivische Ansicht eines Kontaktelements,
- **Figur 5**: einen Querschnitt durch den Vorspritzling und das Kontaktelement,
- **Figur 6**: einen Querschnitt durch den Vorspritzling und das Kontaktelement sowie zwei Spritzgusswerkzeuge,
- **Figur 7**: eine perspektivische Ansicht auf eine Außenseite eines Vorspritzlings, auf die eine Heizeinheit angeordnet ist und
- **Figur 8**: einen Querschnitt durch den Vorspritzling, zwei Kontaktelemente, eine Heizeinheit und eine Schutzhülle.

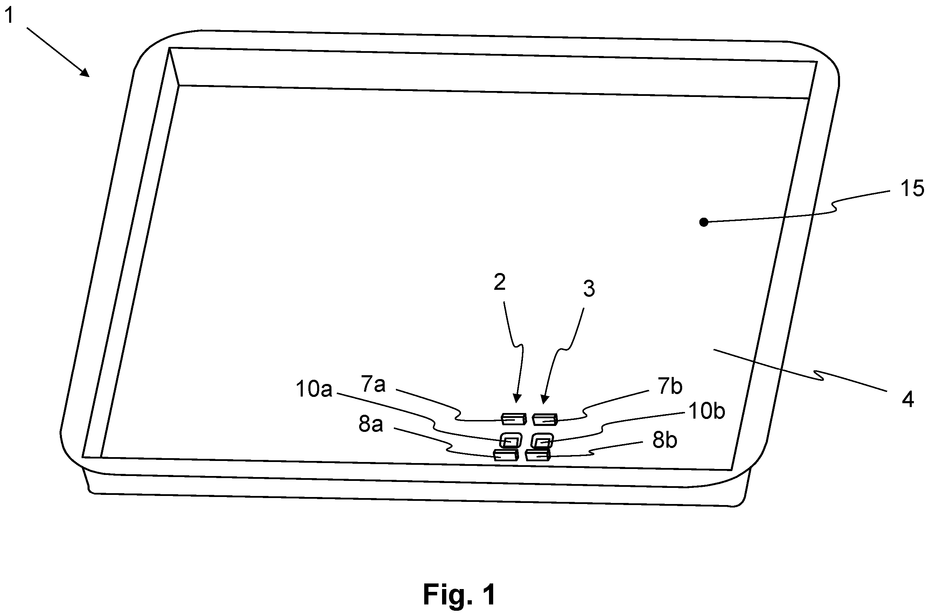

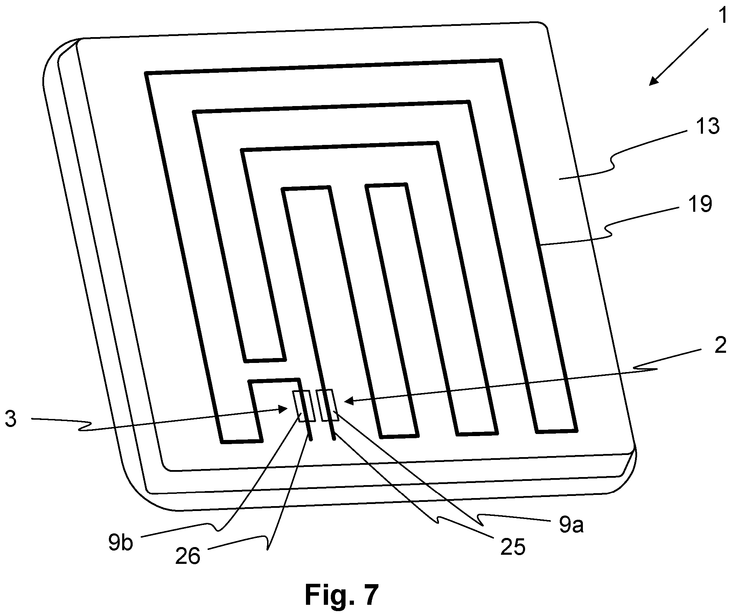

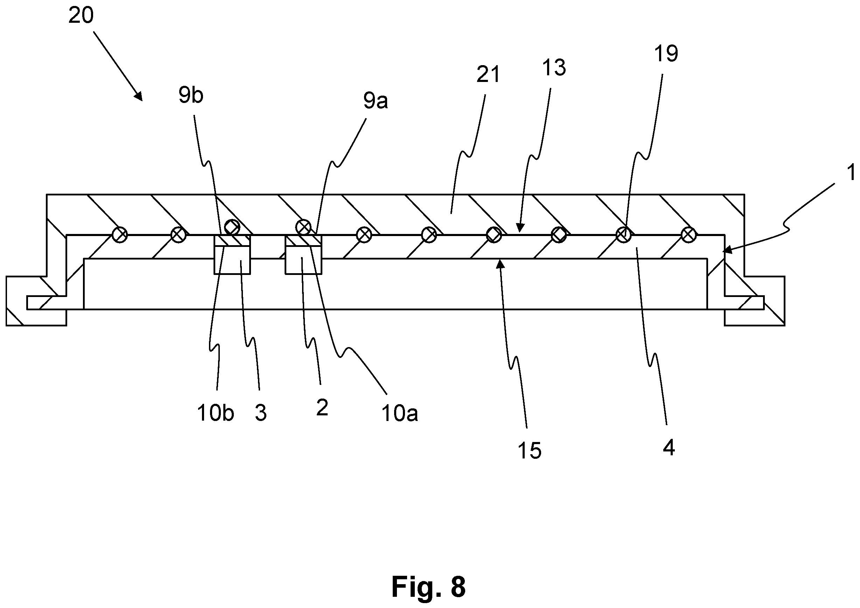

Figur 1 zeigt eine perspektivische Ansicht auf eine Innenseite 15 eines Vorspritzlings 1. Der Vorspritzling 1 kann zur Herstellung eines Radoms 20 für eine Radarvorrichtung verwendet werden. Das Radom 20 ist in der Figur 8 zumindest teilweise gezeigt. Das Radom 20 dient hierbei als Abdeckung der Radarvorrichtung. Die Radarvorrichtung wird bei Fahrzeugen eingesetzt, um beispielsweise Abstandsmessungen zu anderen Verkehrsteilnehmern oder Objekten durchzuführen. Die Radarvorrichtung kann hierzu im Bereich von Stoßstangen angeordnet sein. Das Radom 20 ist ferner von außen am Fahrzeug zumeist sichtbar. Das Radom 20 schützt ferner die Elektronik der Radarvorrichtung. Das Radom 20 soll ferner beheizbar sein, um zu verhindern, dass Wasser auf dem Radom 20 gefriert und so eine Abstandsmessung verfälscht. Das Radom 20 kann mit der in Figur 7 und 8 gezeigten Heizeinheit 19 beheizt werden.

Das Verfahren umfasst die Herstellung des Vorspritzlings 1, der zumindest ein Kontaktelement 2, 3 aufweist. Bei der Herstellung des Vorspritzlings 1 wird das zumindest eine Kontaktelement 2, 3 mit einem Kunststoff 4 zumindest teilweise umspritzt.

Im hier gezeigten Ausführungsbeispiel, wie auch in den folgenden Ausführungsbeispielen, umfasst der Vorspritzling 1 zwei Kontaktelemente 2, 3. Bei der Ausbildung des Vorspritzlings 1 werden somit zwei Kontaktelemente 2, 3 zumindest teilweise mit dem Kunststoff 4 umspritzt. Dies ist von Vorteil, da die Heizeinheit 19 ein Heizdraht sein kann, so dass mit den beiden Kontaktelementen 2, 3 ein elektrischer Strom durch die Heizeinheit 19 geführt werden kann, um das Radom 20 zu beheizen. Die beiden Kontaktelemente 2, 3 können zueinander baugleich sein und/oder zumindest dieselben Merkmale aufweisen, auch wenn beide Kontaktelemente 2, 3 zueinander unterschiedlich ausgebildet sind.

Das zumindest eine Kontaktelement 2, 3 umfasst zumindest einen Haltefortsatz 7, 8. Gemäß dem vorliegenden Ausführungsbeispiel umfasst das zumindest eine Kontaktelement 2, 3 zwei Haltefortsätze 7, 8. Da hier zwei Kontaktelemente 2, 3 gezeigt sind, weist jeder der beiden Kontaktelemente 2, 3 jeweils zwei Haltefortsätze 7, 8 auf. Das erste Kontaktelement 2 weist die beiden Haltefortsätze 7a, 8a und das zweite Kontaktelement 3 weist die beiden Haltefortsätze 7b, 8b auf. Mit Hilfe des zumindest einen Haltefortsatz 7, 8 kann das Kontaktelement 2, 3 in einem Spritzgusswerkzeug 5, 6 gehalten werden, wie es in einer der folgenden Figuren gezeigt ist. Des Weiteren ragt der zumindest eine Haltefortsatz 7, 8 über die Innenseite 15 hinaus. Der zumindest eine Haltefortsatz 7, 8 erstreckt sich über die Innenseite 15. Der zumindest eine Haltefortsatz 7, 8 ist zumindest teilweise vom Kunststoff 4 umspritzt.

Ferner weist das zumindest eine Kontaktelement 2, 3 einen Anschlussbereich 10a, 10b auf. Da in diesem Ausführungsbeispiel zwei Kontaktelemente 2, 3 gezeigt sind, weist jeder der beiden Kontaktelemente 2, 3 einen Anschlussbereich 10a, 10b auf. Mit Hilfe des Anschlussbereichs 10a, 10b kann ein elektrischer Kontakt ausgebildet werden, um die im Folgenden gezeigte Heizeinheit 19 mit elektrischer Energie zu versorgen. Wie hier zu sehen ist, ist der Anschlussbereich 10a, 10b nicht vom Kunststoff 4 bedeckt. Beim Herstellungsverfahren wird das zumindest eine Kontaktelement 2, 3 derart umspritzt, dass der Anschlussbereich 10a, 10b frei vom Kunststoff 4 bleibt. Infolgedessen muss der Anschlussbereich 10a, 10b im Nachhinein nicht vom Kunststoff 4 befreit bzw. freigelegt werden.

Merkmale, welche bereits in der zumindest einen vorgegangenen Figur beschrieben sind, können der Einfachheit halber nicht nochmals erklärt werden. Ferner können Merkmale auch erst in dieser oder in zumindest einer der nachfolgenden Figuren beschrieben werden. Des Weiteren werden der Einfachheit halber für gleiche Merkmale gleiche Bezugszeichen verwendet. Außerdem können der Übersichtlichkeit halber nicht mehr alle Merkmale in den folgenden Figuren gezeigt und/oder mit einem Bezugszeichen versehen sein. Es können jedoch in einer oder mehreren der vorangegangenen Figuren gezeigte Merkmale auch in dieser oder in einer oder mehreren der nachfolgenden Figuren vorhanden sein. Ferner können der Übersichtlichkeit halber Merkmale auch erst in dieser oder in einer oder mehreren der nachfolgenden Figuren gezeigt und/oder mit einem Bezugszeichen versehen sein. Nichtsdestotrotz können Merkmale, welche erst in einer oder mehreren der nachfolgenden Figuren gezeigt sind, auch bereits in dieser oder einer vorangegangenen Figur vorhanden sein.

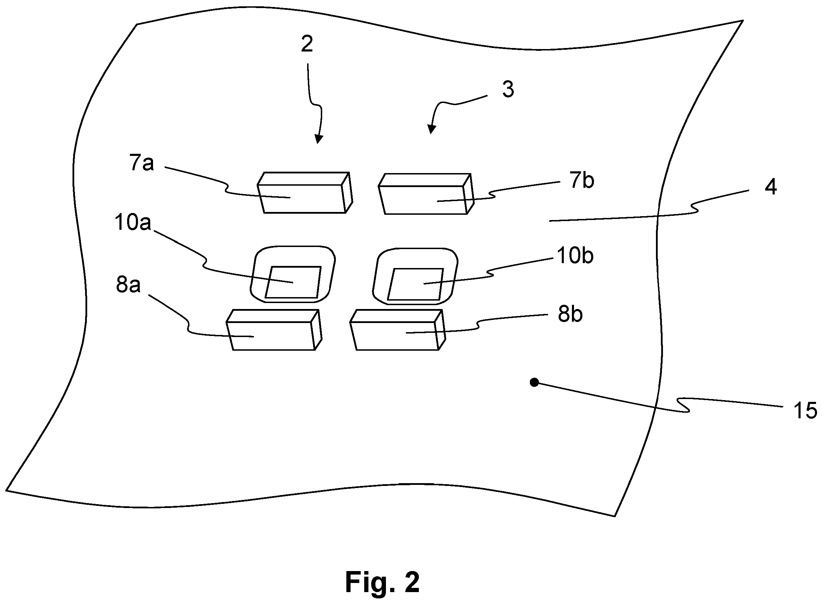

Figur 2 zeigt eine perspektivische Ansicht eines Ausschnitts auf die beiden Kontaktelemente 2, 3 der Figur 1. Die Haltefortsätze 7, 8 der beiden Kontaktelemente 2, 3 ragen aus dem Kunststoff 4 und/oder die Innenseite 15 hinaus bzw. hinweg. Des Weiteren ist zu sehen, dass die Anschlussbereiche 10a, 10b frei liegen und/oder nicht von Kunststoff 4 bedeckt sind. Die Anschlussbereiche 10a, 10b sind nicht nachbearbeitet in dem Sinne, dass der Kunststoff 4 entfernt wurde. Das zumindest eine, insbesondere beide, Kontaktelement(e) 2, 3 werden derart umspritzt, dass der bzw. die Anschlussbereiche 10a, 10b frei bleiben und/oder nicht vom Kunststoff 4 bedeckt werden.

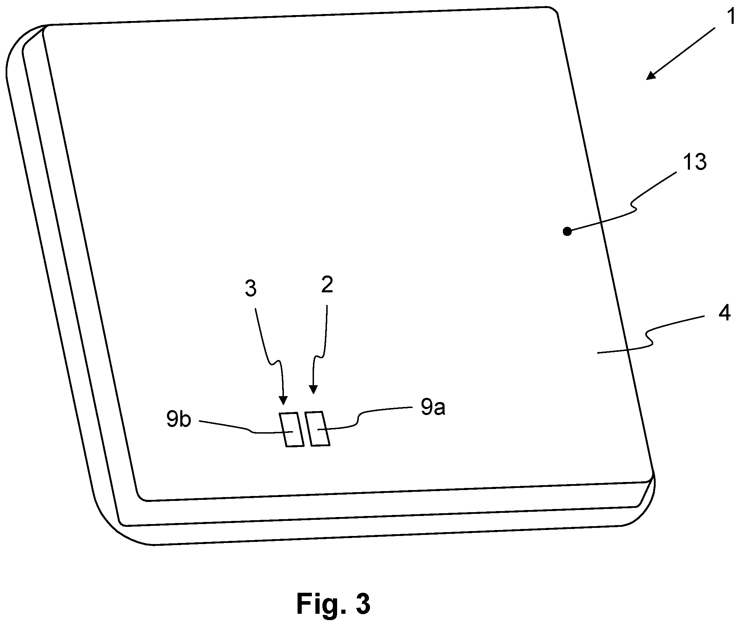

Figur 3 zeigt eine perspektivische Ansicht auf eine Außenseite 13 eines Vorspritzlings 1. Die Außenseite 13 und die in den Figuren 1 und 2 gezeigte Innenseite 15 sind auf den beiden gegenüberliegenden Seiten des Vorspritzlings 1 angeordnet. Des Weiteren sind hier die beiden Kontaktelemente 2, 3 zu sehen. Die Kontaktelemente 2, 3 bzw. das zumindest eine Kontaktelement 2, 3 erstreckt sich durch den Kunststoff 4 und/oder bis zur Außenseite 13. In den Figuren 1 und 2 erstrecken sich die Kontaktelemente 2, 3 bzw. das zumindest eine Kontaktelement 2, 3 durch den Kunststoff 4 und/oder bis zur Innenseite 15.

Das zumindest eine Kontaktelement 2, 3 bzw. beide Kontaktelemente 2, 3 werden derart vom Kunststoff 4 umspritzt, dass ein Kontaktbereich 9a, 9b frei vom Kunststoff 4 bleibt. Gemäß dem vorliegenden Ausführungsbeispiel sind zwei Kontaktelemente 2, 3 gezeigt, wobei jedes Kontaktelement 2, 3 jeweils einen Kontaktbereich 9a, 9b aufweist. Mit Hilfe des zumindest einen Kontaktbereichs 9a, 9b kann die Heizeinheit 19 kontaktiert werden, so dass der Heizeinheit 19 elektrische Energie zugeführt werden kann. Mittels der beiden hier gezeigten Kontaktbereiche 9a, 9b kann ein Stromkreis ausgebildet werden, der Strom durch die Heizeinheit 19 führt.

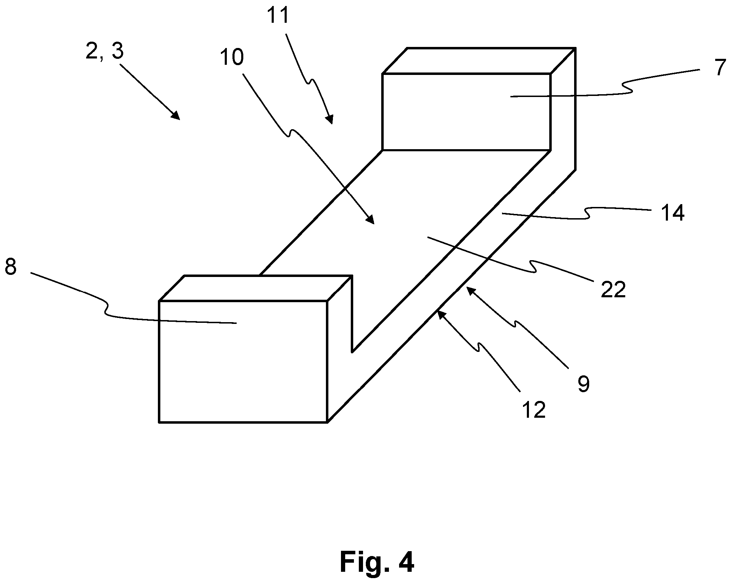

Figur 4 zeigt eine perspektivische Ansicht des Kontaktelements 2, 3. Wie bereits erwähnt, können, wenn zwei Kontaktelemente 2, 3 vorhanden sind, beide baugleich ausgeführt sein. Beispielsweise kann das zumindest eine Kontaktelement 2, 3 als Stanz- und/oder Biegeteil ausgebildet sein. Als Stanz- und/oder Biegeteil kann das Kontaktelement 2, 3 hierbei abgerundete Kanten aufweisen. Das Kontaktelement 2, 3 ist vorteilhafterweise elektrisch leitfähig.

Wie des Weiteren hier zu sehen ist, ist das Kontaktelement 2, 3 U-förmig ausgebildet. Zwischen den beiden Haltefortsätzen 7, 8, die in Figur 1 zu sehen sind, erstreckt sich ein Mittelteil 22.

Des Weiteren weist das Kontaktelement 2, 3 eine Elementinnenseite 11 und eine Elementaußenseite 12 auf. Die Elementinnenseite 11 und/oder das Mittelteil 22 weisen den Anschlussbereich 10 auf. Die Elementaußenseite 12 und/oder das Mittelteil 22 weisen den Kontaktbereich 9 auf.

Ferner umfasst das Kontaktelement 2, 3 eine Elementumfangsseite 14. An die Elementumfangsseite 14 wird zumindest teilweise der Kunststoff 4 angegossen. Von Vorteil ist es, wenn die Elementumfangsseite 14 vollständig mit dem Kunststoff 4 angegossen wird. Die vollständige Elementumfangsseite 14 ist somit mit dem Kunststoff 4 verbunden. Hierbei bleiben lediglich die Bereiche des Haltefortsatzes 7, 8 oder der Haltefortsätze 7, 8 frei, die aus dem Kunststoff 4 bzw. über die Innenseite 15 heraus- bzw. hinwegragen.

Beim Verfahren zur Herstellung des Vorspritzling 1 und/oder des Radoms 20 kann dieses hier gezeigte Kontaktelement 2, 3 als Ausgangspunkt dienen. Das heißt, dass bei einem ersten Verfahrensschritt dieses hier gezeigte Kontaktelement 2, 3 umspritzt wird. Insbesondere heißt das, dass vor dem Umspritzen des Kontaktelements 2, 3 zur Ausbildung des Vorspritzlings 1 und/oder des Radoms 20 das Kontaktelement 2, 3 noch nicht umspritzt ist.

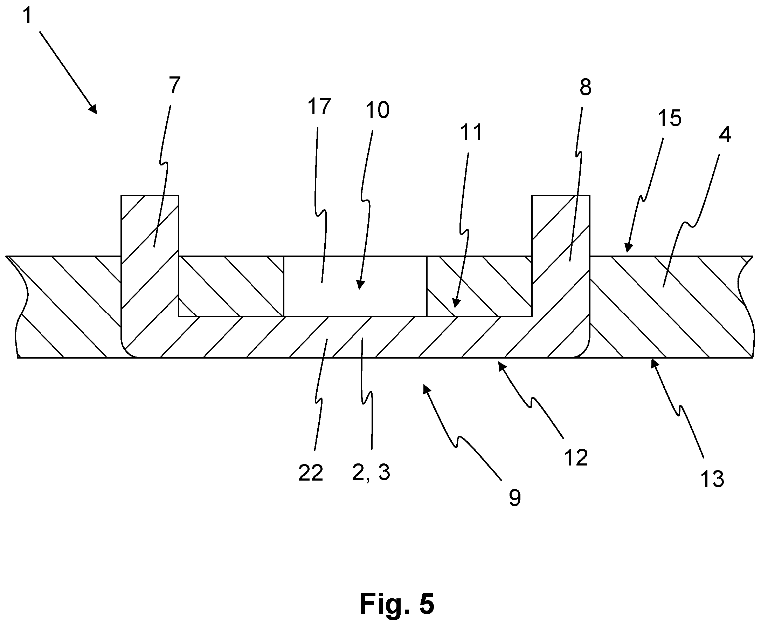

Figur 5 zeigt einen Querschnitt durch den Vorspritzling 1 und durch das Kontaktelement 2, 3 bzw. durch eines der beiden in den Figuren 1 und 2 gezeigten Kontaktelemente 2, 3.

Die Haltefortsätze 7, 8 ragen aus dem Kunststoff 4 hinaus und/oder ragen über die Innenseite 15 hinweg.

Des Weiteren ist das zumindest eine Kontaktelement 2, 3 derart umspritzt, dass die Elementaußenseite 12 und/oder der Kontaktbereich 9 plan ist mit der Außenseite 13 des Kunststoffs 4 und/oder des Vorspritzlings 1.

Des Weiteren ist das zumindest eine Kontaktelement 2, 3 derart umspritzt, dass auf der Innenseite 15 eine Aussparung 17 ausgebildet ist, in der der Anschlussbereich 10 angeordnet ist. Die Aussparung 17 bleibt frei von Kunststoff 4 bzw. ist ein kunststofffreier Bereich, so dass ein elektrischer Kontakt mit dem Anschlussbereich 10 hergestellt werden kann. In den Bereichen neben der Aussparung 17 ist die Elementinnenseite 11 mit Kunststoff 4 überspritzt. Hierdurch ist das zumindest eine Kontaktelement 2, 3 fest im Kunststoff 4 angeordnet.

Wie ferner zu sehen ist, sind auch die Haltefortsätze 7, 8 bzw. der zumindest eine Haltefortsatz 7, 8 zumindest teilweise vom Kunststoff 4 umspritzt. Hierdurch wird eine stabile Verbindung zwischen dem zumindest einen Kontaktelement 2, 3 und dem Kunststoff 4 ausgebildet.

Wir hier außerdem zu sehen ist, ist das zumindest eine Kontaktelement 2, 3 als Biegeteil ausgebildet. Dies ist daran zu erkennen, dass die Ecken zwischen dem Kontaktbereich 9 und der Außenseite 13 abgerundet sind.

Weiterhin ist hier zu sehen, dass das zumindest eine Kontaktelement 2, 3 U-förmig ausgebildet ist.

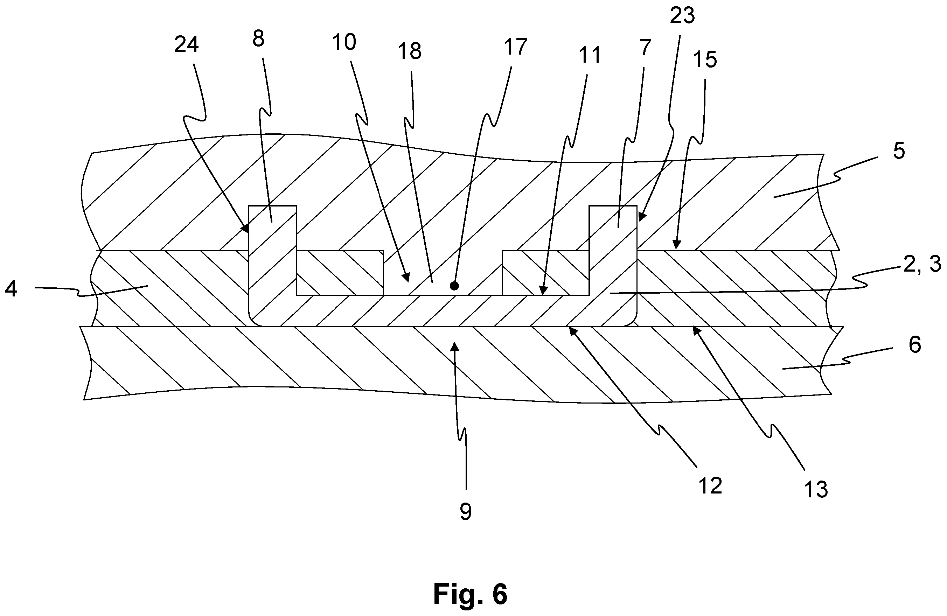

Figur 6 zeigt einen Querschnitt durch den Vorspritzling 1 und das Kontaktelement 2, 3 sowie zwei Spritzgusswerkzeuge 5, 6. Bei Herstellungsverfahren kann zuerst das zumindest eine Kontaktelement 2, 3 in das erste Spritzgusswerkzeug 5 eingelegt und/oder angeordnet werden.

Der zumindest eine Haltefortsatz 7, 8 kann hierfür in zumindest eine Aufnahme 23, 24 im ersten Spritzgusswerkzeug 5 eingelegt und/oder angeordnet werden. Wir hier zu sehen ist, sind zwei Aufnahmen 23, 24 vorhanden, da auch zwei Haltefortsätze 7, 8 vorhanden sind. Dadurch wird das zumindest eine Kontaktelement 2, 3 im ersten Spritzgusswerkzeug 5 gehalten. Das erste Spritzgusswerkzeug 5 kann vorteilhafterweise einen Stempel aufweisen, der bis an die Elementinnenseite 11 reicht. Infolgedessen bleibt die Aussparung 17 und/oder der Anschlussbereich 10 frei vom Kunststoff 4. In den Bereichen neben dem Stempel 18 wird das zumindest eine Kontaktelement 2, 3 vom Kunststoff 4 umspritzt. Zusätzlich oder alternativ werden auch die Haltefortsätze 7, 8 vom Kunststoff 4 umspritzt. Frei vom Kunststoff 4 bleiben die Bereiche, insbesondere die Enden der Haltefortsätze 7, 8, die in den Aufnahmen 23, 24 angeordnet sind. Bei nur einem Haltefortsatz 7, 8 bleibt natürlich nur dessen Ende frei vom Kunststoff 4.

Nachdem das zumindest eine Kontaktelement 2, 3 in das erste Spritzgusswerkzeug 5 eingesetzt ist, kann das zweite Spritzgusswerkzeug 6 positioniert werden. Hierbei wird das zweite Spritzgusswerkzeug 6 derart positioniert, dass es auf der Elementaußenseite 12 und/oder dem Kontaktbereich 9 anliegt. Hierdurch wird verhindert, dass der Kunststoff 4 in den Kontaktbereich 9 gelangt. Der Kontaktbereich 9 bleibt daraufhin frei von Kunststoff 4.

Durch die hier gezeigte Anordnung des ersten und/oder zweiten Spritzgusswerkzeugs 5, 6 wird erreicht, dass der Vorspritzling 1 direkt weiterverarbeitet werden kann. Insbesondere kann auf eine Nachbearbeitung des Anschlussbereichs 10 und des Kontaktbereichs 9 verzichtet werden. Insbesondere muss dort kein Kunststoff 4 entfernt werden.

Figur 7 zeigt eine perspektivische Ansicht auf die Außenseite 13 eines Vorspritzlings 1, auf die eine Heizeinheit 19 angeordnet ist. In diesem Ausführungsbeispiel umfasst der Vorspritzling 1 außerdem zwei Kontaktelemente 2, 3, wie es hier zu sehen ist.

Des Weiteren weist jedes der beiden Kontaktelemente 2, 3 einen Kontaktbereich 9a, 9b auf. Da zwei Kontaktelemente 2, 3 gezeigt sind, weist jedes der beiden Kontaktelemente 2, 3 auch jeweils einen Anschlussbereich 10a, 10b auf, die hier aber nicht zu sehen sind.

Des Weiteren ist hier die Heizeinheit 19 gezeigt, mittels der das Radom 20 und/oder der Vorspritzling 1 beheizt werden kann. Dadurch kann verhindert werden, dass sich am Radom 20 Eis ablagert, welches die Radarmessung verfälscht. Dies ist insbesondere für Fahrzeuge wichtig, wenn eine Abstandsmessung zu anderen Fahrzeugen und/oder zu Hindernissen gemessen wird.

Wie außerdem zu sehen ist, umfasst die Heizeinheit 19 einen Heizdraht bzw. die Heizeinheit 19 ist als Heizdraht ausgebildet. Nachdem der Vorspritzling 1 ausgebildet ist, wird die Heizeinheit 19 auf den Vorspritzling 1 und/oder auf die Außenseite 13 angeordnet.

Da die Heizeinheit 19 hier als Heizdraht ausgebildet ist, wird der Heizdraht mäanderförmig abgelegt. Hierbei wird der Heizdraht von einer hier nicht gezeigten Führung auf die Außenseite 13 abgelegt, indem die Führung diese mäanderförmige Anordnung abfährt. Der Heizdraht wird nicht auf einmal abgelegt, sondern nacheinander, das heißt nach und nach entlang der hier gezeigten dicken Linie.

Während des Ablegens des Heizdrahts kann dieser gleichzeitig in den Vorspritzling 1, in die Außenseite 13 und/oder in den Kunststoff 4 eingebettet werden. Dies kann beispielsweise mittels Ultraschallschweißens erfolgen. Beim Ablegen kann der Heizdraht mit dem Ultraschallschweißen in den Kunststoff 4 eingeschweißt werden. Hierdurch erfolgt eine feste Verbindung zwischen Heizeinheit 19 und dem Vorspritzling 1.

Um die Heizeinheit 19, die hier als Heizdraht ausgebildet ist, mit elektrischer Energie zu versorgen, wird die Heizeinheit 19 auch über das zumindest eine Kontaktelement 2, 3 gelegt.

Da hier zwei Kontaktelemente 2, 3 gezeigt sind und die Heizeinheit 19 als Heizdraht ausgebildet ist, wird ein erstes Ende 25 und ein zweites Ende 26 des Heizdrahts über die jeweiligen Kontaktelemente 2, 3 gelegt. Die Heizeinheit 19 wird daraufhin mit dem zumindest einen bzw. mit beiden Kontaktelementen 2, 3 kontaktiert. Beispielsweise kann dies mittels Thermokompressions- und/oder Widerstandsschweißens erfolgen. Hierbei werden im Allgemeinen eine Kontakteinheit der Heizeinheit 19 mit dem zumindest einen Kontaktelement 2, 3 kontaktiert. Die Kontakteinheit der Heizeinheit 19 bildet hier die beiden Enden 25, 26.

Des Heizdraht ist gemäß dem vorliegenden Ausführungsbeispiel derart über die Kontaktelemente 2, 3 gelegt, dass der Heizdraht vor und hinter dem entsprechenden Kontaktelement 2, 3 angeordnet ist. Hierdurch ist der Heizdraht auch vor und hinter dem entsprechenden Kontaktelement 2, 3 in den Kunststoff 4 eingebettet und/oder eingeschweißt, so dass der Heizdraht stabil mit dem Kunststoff 4 verbunden ist.

Figur 8 zeigt einen Querschnitt durch den Vorspritzling 1, die beiden Kontaktelemente 2, 3, die Heizeinheit 19 und eine Schutzhülle 21. Hier ist das Radom 20 gezeigt, welches in Radarvorrichtungen für Fahrzeuge, also in Fahrzeugradarvorrichtungen, als Abdeckung verwendet wird.

Nachdem die Heizeinheit 19 auf den Vorspritzling 1 angeordnet und/oder mit diesem verbunden ist, wird der Vorspritzling 1 und die Heizeinheit 19 mit der Schutzhülle 21 überspritzt. Hierbei wird die Außenseite 13 des Vorspritzlings 1 überspritzt. Dies kann wieder mit einem Spritzgussverfahren durchgeführt werden. Die Schutzhülle 21 kann ebenfalls aus einem Kunststoff 4 ausgebildet sein. Die Schutzhülle 21 kann hierbei aus dem gleichen Kunststoff 4 ausgebildet sein, wie der Vorspritzling 1. Alternativ kann die Schutzhülle 21 auch aus einem anderen Kunststoff 4 ausgebildet sein.

Wie hier des Weiteren zu sehen ist, ist die Heizeinheit 19 bzw. der hier gezeigte Heizdraht zumindest teilweise in den Vorspritzling 1 und/oder im Kunststoff 4 eingebettet. Wie hier zu sehen ist, ist die Heizeinheit 19 bzw. der hier gezeigte Heizdraht zur Hälfte in den Vorspritzling 1 und/oder im Kunststoff 4 eingebettet. Die Heizeinheit 19 bzw. der hier gezeigte Heizdraht kann auch vollständig in den Vorspritzling 1 und/oder im Kunststoff 4 eingebettet sein. Infolgedessen bildet die Außenseite 13 eine plane Fläche und/oder die Heizeinheit 19 bzw. der hier gezeigte Heizdraht steht nicht über die Außenseite 13 hinaus.

Wie in diesem Querschnitt zu sehen ist, sind die Anschlussbereiche 10a, 10b frei von Kunststoff 4. An den Anschlussbereichen 10a, 10b können Anschlusskontakte oder Anschlusspins angeordnet werden, um die Heizeinheit 19 mit elektrischer Energie zu versorgen. Das Kontaktelement 2, 3 weist hierfür eine elektrische Leitfähigkeit auf. Das Kontaktelement 2, 3 leitet den Strom vom Anschlussbereich 10a, 10b zum Kontaktbereich 9a, 9b.

### Bezugszeichenliste

- 1: Vorspritzling
- 2: erstes Kontaktelement
- 3: zweites Kontaktelement
- 4: Kunststoff
- 5: erstes Spritzgusswerkzeug
- 6: zweites Spritzgusswerkzeug
- 7: erster Haltefortsatz
- 8: zweiter Haltefortsatz
- 9: Kontaktbereich
- 10: Anschlussbereich
- 11: Elementinnenseite
- 12: Elementaußenseite
- 13: Außenseite
- 14: Elementumfangsseite
- 15: Innenseite
- 17: Aussparung
- 18: Stempel
- 19: Heizeinheit
- 20: Radom
- 21: Schutzhülle
- 22: Mittelteil
- 23: erste Aufnahme
- 24: zweite Aufnahme
- 25: erstes Ende
- 26: zweites Ende

## Patentansprüche

1. Verfahren, insbesondere Radomvorspritzlingherstellungsverfahren und/oder Radomherstellungsverfahren, zur Herstellung eines Vorspritzlings (1) und/oder eines Radoms (20) für Radarvorrichtungen für Fahrzeuge
bei dem ein Vorspritzling (1) mit zumindest einem Kontaktelement (2, 3) zum elektrischen Kontaktieren einer Heizeinheit (19) zum Beheizen des Radoms (20) ausgebildet wird,
**dadurch gekennzeichnet,**
**dass** zur Ausbildung des Vorspritzlings (1) das zumindest eine Kontaktelement (2, 3) zumindest teilweise mit Kunststoff (4) umspritzt wird.

2. Verfahren nach dem vorherigen Anspruch, **dadurch gekennzeichnet, dass** das zumindest eine Kontaktelement (2, 3) derart umspritzt wird, dass es sich von einer Außenseite (13) des Vorspritzlings (1) bis zu einer Innenseite (15) des Vorspritzlings (1) hindurch erstreckt.

3. Verfahren nach einem oder mehreren der vorherigen Ansprüche,
**dadurch gekennzeichnet, dass** das zumindest eine Kontaktelement (2, 3) in ein erstes Spritzgusswerkzeug (5), insbesondere formschlüssig, eingelegt wird und/oder
dass zumindest ein Haltefortsatz (7, 8) des zumindest einen Kontaktelements (2, 3) in eine dafür vorgesehene Aussparung im ersten Spritzgusswerkzeug (5) angeordnet wird.

4. Verfahren nach einem oder mehreren der vorherigen Ansprüche,
**dadurch gekennzeichnet, dass** das zumindest eine Kontaktelement (2, 3) derart umspritzt wird, dass zumindest ein Kontaktbereich (9) und/oder zumindest ein Anschlussbereich (10) zumindest bereichsweise frei von dem Kunststoff (4) bleibt, der den Vorspritzling (1) bildet, und/oder
dass das zumindest eine Kontaktelement (2, 3) derart umspritzt wird, dass eine Elementinnenseite (11) des zumindest einen Kontaktelements (2, 3) zumindest bereichsweise überspritzt wird, wobei die Elementinnenseite (11) den Anschlussbereich (10) umfasst und/oder dass das zumindest eine Kontaktelement (2, 3) derart umspritzt wird, dass an der Elementinnenseite (11), insbesondere zwischen zwei Haltefortsätzen (7, 8), eine Aussparung (17) in dem den Vorspritzling (1) bildenden Kunststoff (4) ausgebildet wird, so dass der Anschlussbereich (10) frei bleibt.

5. Verfahren nach einem oder mehreren der vorherigen Ansprüche, **dadurch gekennzeichnet, dass** das zumindest eine Kontaktelement (2, 3) derart umspritzt wird, dass eine Elementaußenseite (12) des zumindest einen Kontaktelements (2, 3) zumindest bereichsweise, insbesondere vollständig, frei von Kunststoff (4) bleibt, wobei die Elementaußenseite (12) den Kontaktbereich (9) umfasst und/oder dass ein zweites Spritzgusswerkzeug (6) beim Umspritzen plan an den Kontaktbereich (9) angelegt wird und/oder dass das zumindest eine Kontaktelement (2, 3) derart mit dem Kunststoff (4) umspritzt wird, dass die Außenseite (13) des Vorspritzlings (1) und der zumindest eine Kontaktbereich (9) eine, insbesondere plane, Fläche und/oder glatten und/oder stufenlosen Übergang bilden.

6. Verfahren nach einem oder mehreren der vorherigen Ansprüche, **dadurch gekennzeichnet, dass** das zumindest eine Kontaktelement (2, 3) derart umspritzt wird, dass sich der von der Elementinnenseite (11) wegerstreckender Haltefortsatz (7, 8) aus dem Vorspritzling (1) erstreckt.

7. Verfahren nach einem oder mehreren der vorherigen Ansprüche, **dadurch gekennzeichnet, dass** der Kunststoff (4) an eine Elementumfangsseite (14) des zumindest einen Kontaktelements (2, 3) zumindest teilweise angespritzt wird.

8. Verfahren nach einem oder mehreren der vorherigen Ansprüche, **dadurch gekennzeichnet, dass** das zumindest eine Kontaktelement (2, 3) derart umspritzt wird, dass es zumindest an der Elementinnenseite (11) formschlüssig mit dem Vorspritzling (1) verbunden ist.

9. Verfahren nach einem oder mehreren der vorherigen Ansprüche, **dadurch gekennzeichnet, dass** das zumindest eine Kontaktelement (2, 3) derart mit dem Kunststoff (4) umspritzt wird, dass die Innenseite (15) des Vorspritzlings (1), die auf der zur Außenseite (13) abgewandten Seite des Vorspritzlings (1) angeordnet ist, und der zumindest eine Anschlussbereich (10) zueinander beabstandet sind, wobei der zumindest eine Anschlussbereich (10) vorzugsweise gegenüber der Innenseite (15) abgesetzt ist.

10. Verfahren nach einem oder mehreren der vorherigen Ansprüche, **dadurch gekennzeichnet, dass** auf den Vorspritzling (1), insbesondere auf die Außenseite (13), zumindest eine Heizeinheit (19), insbesondere ein Heizdraht, zum Beheizen des Radoms (20) angeordnet wird und/oder
dass die Heizeinheit (19) mit dem zumindest einen, insbesondere mit zwei, vorzugsweise voneinander elektrisch isolierten, Kontaktbereich (9) kontaktiert wird und/oder
dass die Heizeinheit (19) mittels Ultraschallschweißens mit dem Vorspritzling (1) verbunden wird, insbesondere in den Vorspritzling (1) eingebettet wird und/oder
dass das Kontaktieren der Heizeinheit (19) mit dem zumindest einen Anschlussbereich (10) mittels Thermokompressionsschweißens durchgeführt wird und/oder
dass beim Kontaktieren der Heizeinheit (19) mit dem zumindest einen Kontaktbereich (9) mittels Thermokompressionsschweißens eine Umhüllung, insbesondere ein Backlack, entfernt wird und/oder dass die Heizeinheit (19) mit zwei, insbesondere voneinander elektrisch isolierten, Kontaktbereichen kontaktiert wird und/oder dass der Heizdraht mäanderförmig auf den Vorspritzling (1), insbesondere auf die Außenseite (13), angeordnet wird.

11. Verfahren nach einem oder mehreren der vorherigen Ansprüche,
**dadurch gekennzeichnet, dass** der Vorspritzling (1) und die Heizeinheit (19) umspritzt wird, so dass der Vorspritzling (1) und die Heizeinheit (19) von einer Schutzhülle (21) umgeben sind und/oder dass zwei Kontaktelemente (2, 3) mit dem Kunststoff (4) umspritzt werden, die vorzugsweise voneinander beabstandet angeordnet werden.

12. Verfahren nach einem oder mehreren der vorherigen Ansprüche,
**dadurch gekennzeichnet, dass** zuerst der Vorspritzling (1) ausgebildet wird, in dem das zumindest eine Kontaktelement (2, 3) mit dem Kunststoff (4) umspritzt wird,
dass danach die Heizeinheit (19) auf dem Vorspritzling (1) angeordnet wird, dass danach die Heizeinheit (19) mit dem Vorspritzling (1) verbunden wird,
dass danach die Heizeinheit (19) mit dem zumindest einen Kontaktelement (2, 3) kontaktiert wird und/oder
dass danach der Vorspritzling (1) und die Heizeinheit (19) mit der Schutzhülle umspritzt wird.

13. Vorspritzling (1), der gemäß einem oder mehreren der vorherigen Verfahrensansprüche hergestellt ist.

14. Radom (20), das gemäß einem oder mehreren der vorherigen Verfahrensansprüche hergestellt ist.

15. Radarvorrichtungen mit einem Radom (20), das gemäß dem vorherigen Anspruch ausgebildet ist und/oder das gemäß einem oder mehreren der vorherigen Verfahrensschritte ausgebildet ist.
